# EUROPEAN PATENT SPECIFICATION

(11) **EP 3 732 238 B1**
(45) Date of publication and mention of the grant of the patent: **02.07.2025**
(21) Application number: 17936445.0
(22) Date of filing: 27.12.2017
(51) Int. Cl.: C08L 23/06, C08L 23/04, C08K 3/04, C08K 3/34, F16L 57/00, G02B 6/44

(54) **POLYETHYLENE COMPOSITION WITH INCREASED STRENGTH CHARACTERISTICS, METHOD FOR PREPARING SAID COMPOSITION AND USE THEREOF**
POLYETHYLENZUSAMMENSETZUNG MIT ERHÖHTEN FESTIGKEITSEIGENSCHAFTEN, VERFAHREN ZUR HERSTELLUNG DER ZUSAMMENSETZUNG UND VERWENDUNG DAVON
COMPOSITION DE POLYÉTHYLÈNE POSSÉDANT DES CARACTÉRISTIQUES DE RÉSISTANCE ACCRUES, PROCÉDÉ DE PRÉPARATION DE LADITE COMPOSITION ET UTILISATION CORRESPONDANTE

(43) Date of publication of application: 04.11.2020
(73) Proprietor: Public Joint Stock Company "Sibur Holding", Tobolsk, Tyumen region 626150 (RU)
(72) Inventor: VOLKOV, Alexey Mikhailovich, Seversk, 636019 (RU); RYZHIKOVA, Irina Gennadievna, Seversk, 636037 (RU)
(74) Representative: Peters, Andreas
(86) International application number: PCT/RU2017/000996
(87) International publication number: WO 2019/132695

(56) References cited:
- EP-A1- 3 118 231
- WO-A1-2005/041214
- WO-A1-2007/031156
- WO-A1-2012/000958
- WO-A1-2016/082211
- US-A1- 2002 006 486
- US-A1- 2014 127 438

## Description

### Field of the invention

The present invention relates to compositions on the basis of binary polyethylene mixtures comprising linear low-density polyethylene (LLDPE) and high-density polyethylene (HDPE), which are used in the manufacture of articles, in particular, a outer sheath for fiber optic cables and an outer insulation layer for steel pipelines.

### Background

In the prior art there are known materials based on high-density, medium-density and low-density polyethylenes (PE), produced by various methods, both by a radical mechanism under high pressure and temperature (LDPE (HPPE)) and by a catalytic method under low pressure and temperature (HDPE (LPPE) and copolymers of ethylene with higher α-olefins, such as linear low-density PE (LLDPE) and medium-density PE (MDPE)). Also known are compositions produced on the basis of these separate types of PEs aimed at use in various fields of technology, in particular, in pipe and cable industries.

High requirements are imposed to the compositions intended to be used in pipe and cable industries, and polyethylene-based materials used in these industries must possess a number of properties, in particular, high strength characteristics, such as tear strength, flexural modulus, as well as high heat and cold resistance, and a desired surface hardness of an article.

Compositions based on HDPE, including bi- and multimodal HDPE, for use in cable and pipe industry are known in the prior art. In particular, patent RU2333924 discloses a composition that comprises a multimodal ethylene polymer comprising 80 to 99.8 wt.% repeating ethylene units and 0.2 to 20 wt.% of repeating C3-C20 olefin units. Documents EP0739937 and WO02102891 discloses compositions, which like those of RU2333924, comprise two polyethylene fractions, wherein one fraction has a lower molecular weight and preferably is a homopolymer, whereas the other fraction with a higher molecular weight preferably is an ethylene copolymer comprising one or more α-olefin co-monomers.

Such compositions provide materials based on them with a balanced combination of thermal, mechanical and processing properties. However, materials based on these compositions have high hardness (flexural modulus > 900 MPa), reduced elasticity and impact resistance at low and ultralow temperatures due to high crystalline nature of HDPE. In addition, HDPE-based compositions frequently have comparably low tear strength.

Improved deformation-strength characteristics, including at low temperature, are shown for compositions based on linear polyethylene of a low and a medium density (LLDPE and MDPE). Patent JP 3495391 provides an LLDPE-based composition that is characterized by a melt flow rate (MFR) of from 0.1 to 1.5 g/10 min and a broad molecular weight distribution (MWD). A peculiarity of such a composition is its relative elongation at break determined at -45°C and being equal to not less than 200%. These properties allow using the composition in the pipe industry as an anticorrosive coating for steel pipes working under various environmental conditions. However, this composition has insufficient strength characteristics, in particular, low tensile yield and heat resistance, which limits its applications in cable and pipe industry compared with HDPE used for the same purposes.

One approach to improve properties of such compositions is a method for preparing a binary composition based on a combination of HDPE and LLDPE. Thus, patent JP09241437 discloses a composition for insulation of steel pipes, prepared on the basis of a mixture of 10-40 wt.% of HDPE and 60-90 wt.% of LLDPE. The inventors succeeded in achieving a good balance of its low-temperature parameter expressed in an improvement of relative elongation at break at -45°C to 400%, and such a high-temperature parameter as penetration resistance at 70°C. However, a relatively low content of HDPE in said composition reduces possibilities for further improving strength characteristics and heat resistance of such systems, thereby limiting practical applications of materials based on them.

Patent CN101747552 provides a method for eliminating the above-mentioned drawbacks of polyethylene compositions for insulation of steel pipes by increasing the content of HDPE in a composition to 45-80 wt.%. In addition, the composition comprises, in addition to HDPE and LLDPE, other additives, in particular, 0.3 to 1 wt.% of an antioxidant, 0.5 to 1.5 wt.% of a processing additive, and 3 to 7 wt.% of carbon black masterbatch. The proposed material is characterized by a balance of strength (20 to 27 MPa), Vicat heat resistance (10H) (110-123°C), and impact resistance at low temperatures. A disadvantage of this composition is its complexity and a low MFR_{(190/2.16)} (0.2 to 0.44 g/10 min), which also limits its processability.

As known in the prior art, the physical and mechanical properties of polymer compositions can be improved by addition of nucleating agents to said compositions. In this case, the role of nucleating agents is to generate artificial nucleation centers, which significantly accelerates the crystallization process of polymer macromolecules **[**Hoffmann, K., Huber, G., Mader, D. Nucleating and clarifying agents for polyolefins, Macromol. Symp. 2001, 176, 83-91**].** The addition of a nucleating agent initiates crystallization of macromolecules on the surface of a new phase and provides a polymer with a high crystallinity and low-sized crystalline grains, similar in form, which provides improved physical and other properties of the compositions. However, for such a very rapidly polymerizing polymer such as polyethylene, in particular HDPE, the use of inorganic and/or organic nucleating agents known in the prior art is either ineffective or weakly effective, and their use is unreasonable, first of all, from an economical point of view.

Nevertheless, there are a number of patents relating to HDPE-based polyethylene compositions comprising dispersed mineral fillers, as well organic nucleating agents, which can increase the density and hardness of a prepared composition and reduce neck-in of an extruded tube.

Thus, patents RU2271373 and RU2394052 disclose the use of carbon black and other inorganic dispersed mineral fillers in mono-, bi-, and multimodal HDPE compositions for the manufacture of pressure pipes for pumping various substances. RU2271373 solves the problem of improving a set of parameters (processability, resistance to slow crack growth and the calculated maximum allowable stress for pipe products) by an optimal ratio of different HDPE fractions having low and high molecular weights and various and strictly dosed contents of structural units of macromolecules. The role of carbon black added to the composition in an amount of 1 to 8 wt.% is limited to its function as a photo- and heat stabilizer and, as noted in the patent, is to increase the density of the final composition. The document is silent about other functions of carbon black. It is noted that carbon black can be added as a masterbatch with a concentration of 20 to 60 wt.%, preferably from 35 to 45 wt.%, predominantly in a mixture with polyethylene.

RU2394052 proposes to use from 1 to 10 wt.% of a dispersed inorganic or mineral filler in a composition in order to reduce neck-in of an extruded tube made of mono-, bi- or multimodal HDPE. As a filler it is possible to use, for example, titanium dioxide, carbides and silicon oxides, oxides of antimony, zinc, aluminum and other metals, carbon black, acetylene black, calcium carbonate and other salts of alkaline earth metals, glass fibers, clay, etc. An antioxidant and/or heat stabilizer can also be added to the composition in an amount of 0 to 3 wt.%. The filler is introduced as a 5-50% masterbatch based on any known polyethylene with a density of from 0.87 to 0.93 g/cm³. This patent does not disclose other functions, besides the above, for mineral filler or carbon black in the HDPE composition for pipes.

RU2408619 describes the use of organic nucleating agents, preferably organic pigments, for example phthalocyanine blue, as well as polymers having a melting point of at least 200°C, for example polyvinylcyclohexane or 3-methyl-1-butene, in bi- or multimodal HDPE compositions for the manufacture of pressure pipes with increased flexibility. A distinguishing feature of the invention is that not only the high molecular weight fraction, but also the low molecular weight fraction of HDPE consists of a copolymer of ethylene with higher α-olefins, which obviously provides articles made of this composition with an increased flexibility. The introduction of organic nucleating agents contributes, similarly to the previous patent, to reducing an undesirable neck-in of an extruded pipe before its cooling, and also, probably, to increasing the dimensional stability of a tubular article due to its shrinkage after molding. This patent does not mention other functions of the nucleating agent.

The use of a nucleating agent to increase the crystallization temperature of HDPE is disclosed in the invention of RU2534611 that describes a bimodal HDPE composition for producing injection molded articles, which are lids, or other sealing materials. The composition comprises a synergistic combination of a nucleating agent and a slip agent, which allows increasing the crystallization temperature and reducing the friction coefficient of the HDPE-based composition. It is most preferable to use a combination of dispersed talc in an amount of 0.5 to 2 wt.% with an amide slip agent in an amount of 0.05 to 0.4 wt.%. Other nucleating agents are also possible, for example, kaolin, silicon oxide, sodium and potassium benzoates, dibenzylidene sorbitol derivatives, etc. An increase in the temperature at the beginning of the crystallization process of polyethylene macromolecules promotes a reduction in the cycle of injection molding of articles, which increases the line productivity and the effectiveness of the molding process of these articles. The patent does not disclose other functions of the nucleating agent.

Thus, from the prior art it is known that nucleating agents of any nature in compositions of polyethylene, namely HDPE, are used to solve problems associated primarily with rheological characteristics of HDPE. HDPE is known to consist of macromolecules having a low melt strength and, as a consequence, providing a negative effect consisting in neck-in of a pipe and any other articles produced by extrusion. The use of nucleating agents makes it possible to increase temperature at the beginning of the crystallization process of HDPE macromolecules and leads to the acceleration of the formation of a physical network of intercrystalline links in the matrix of molten HDPE, which increases the melt strength, thereby reducing neck-in of a tubular blank or another article leaving an extruder. However, with increasing the crystallinity of the composition, the negative consequences associated with its rigidity and brittleness under impact conditions are enhanced, especially at lower temperatures, which in turn limits the use of such a composition for making shells of the outer insulation layer of steel pipelines.

It should be noted that polyethylene compositions comprising a nucleating agent used as an additive that improves strength and relative elongation at break of the polyethylene compositions, which allows more successful use of these compositions in the manufacture of a sheath for fiber optic cables and an outer insulation layer for steel pipelines, are not disclosed in the prior art.

Thus, despite the efforts of the previous researchers, further improvements in the production of polyethylene compositions characterized by high strength characteristics and allowing their use for insulation of fiber optic cables and steel pipes are of great importance and are necessary.

### Summary of the invention

**The object of the present invention** is to improve strength characteristics of binary polyethylene compositions intended for use in the cable industry and for insulation pipes, by improving the morphology and homogeneity of the distribution of the crystalline phase of polyethylenes in the compositions, which results in an improved strength and relative elongation at break.

**This technical problem is solved and the desired technical result is achieved** by using in the composition two polyethylenes with macrochains of different structure that is determined by methods of synthesis of polyethylene, namely LLDPE and HDPE, as well as by using in the composition inorganic nucleating agents, which are dispersed particles of either a mineral filler (talc) or soot (carbon black). Thus, HDPE, which is present in the composition as the most highly crystalline component, improves its strength characteristics, surface hardness and heat resistance. The additional content of LLDPE in the composition improves its elasticity. In addition, the inventors have surprisingly found that the use of nucleating agents in the composition significantly improves its strength characteristics, wherein the nucleating agents are either talc or soot (carbon black) introduced into the composition as masterbatch in HDPE or LLDPE.

The composition according to the present invention makes it possible to improve the strength characteristics of binary polyethylene compositions, namely, to increase the tear strength to 39.7 MPa and the relative elongation at break at 23°C to 790%. The composition prepared according to the invention is also characterized by a tensile yield strength of up to 20 MPa, a Vicat heat resistance (10H) of up to 123-125°C, a Shore D hardness of 62-63 units at 1 s, a melt flow rate (MFR_{(190°C/2.16kg)}) at 190°C/2.16 kg of 0.9 g/10 min. In addition, the claimed composition has a high stress-cracking resistance of not less than 2000 hours. A polyethylene composition with such characteristics is suitable for the manufacture of a sheath for fiber optic cables and an outer insulation layer for steel pipelines.

### Description of drawings

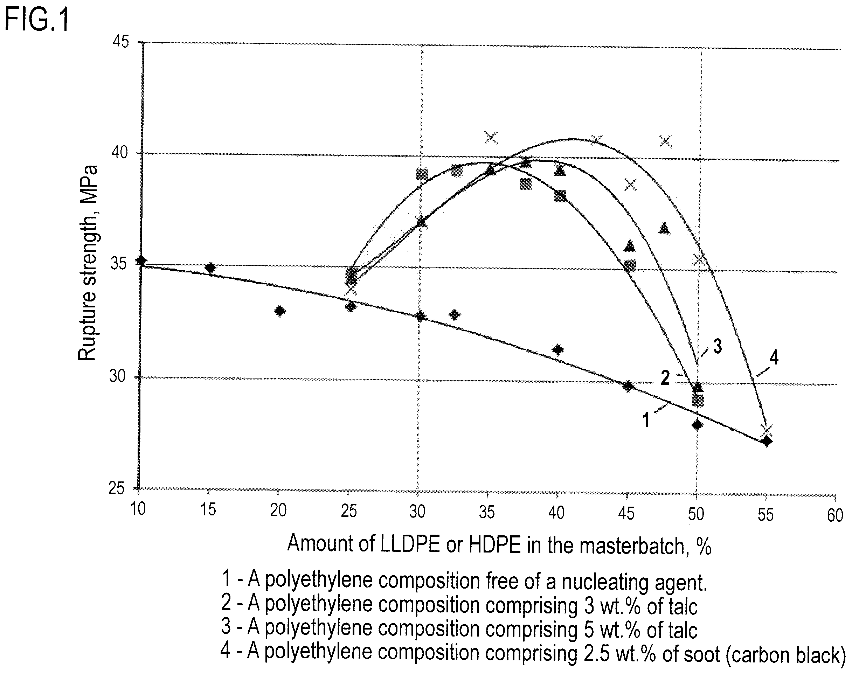

FIG.1 shows an effect of nucleating agents and their concentration on the tear strength of the resulting composition.

The data in Fig.1 show a dependence of the effect of increasing the tear strength of binary compositions including LLDPE, HDPE and soot (carbon black) or talc masterbatch in LLDPE or HDPE on the amount of the LLDPE or HDPE in the masterbatch. As can be seen in Fig.1, the maximum increase in the tear strength of the polyethylene composition is observed when the content of polyethylene in the masterbatch is in the range of from 30 to 50 wt.%.

### Detailed description of the invention

According to the present invention, a composition is provided that comprises:
- from 35 to 69.5 wt.% of linear low-density polyethylene (LLDPE);
- from 30 to 50 wt.% of high-density polyethylene (HDPE);
- from 0.5 to 10 wt.% of a nucleating agent: talc or soot (carbon black); and
- from 0 to 5 wt.% of another optional additive or a mixture of additives.

Hereinafter, linear low-density polyethylene and high-density polyethylene are referred to as LLDPE and HDPE, respectively.

The LLDPE used herein is a polyethylene produced by a method of anionic-coordination copolymerization of ethylene and C₃₋₁₀ α-olefins under low pressure on Ziegler-Natta catalysts, according to standard industrial techniques. The LLDPE used in the composition is characterized by an MFR_{(190°C/2.16kg)} of from 0.1 to 2 g/10 min, preferably from 0.3 to 1 g/10 min, more preferably from 0.5 to 1 g/10 min, and has a density of from 0.910 to 0.935 g/cm³, preferably from 0.915 to 0.935 g/cm³, more preferably from 0.918 to 0.930 g/cm³.

It is preferable to use LLDPE that has a molecular weight of from 50 000 to 400 000, preferably from 70 000 to 250 000, most preferably from 80 000 to 100 000.

The molecular weight according to the present invention means an average molecular weight, unless otherwise noted.

The content of LLDPE in the composition is from 35 to 69.5 wt.%, preferably from 39 to 66.5 wt.%.

Any polyethylene of known trademarks or mixtures thereof can also be used as LLDPE. For example, trademarks of LLDPE that can be used include Daelim XP 9200, XP 9100, SABIC LLDPE 6118, SABIC LLDPE V046, SABIC LLDPE 118 and other trademarks with similar properties.

The HDPE used herein is polyethylene produced by a method of anionic-coordination polymerization of ethylene under low pressure on Ziegler-Natta catalysts, according to standard industrial techniques. The HDPE used in the composition is characterized by an MFR_{(190°C/2.16kg)} of from 0.1 to 2 g/10 min, preferably from 0.5 to 1 g/10 min, and has a density of from 0.945 to 0.970 g/cm³, preferably from 0.955 to 0.965 g/cm³.

It should be noted that the used HDPEs include only monomodal homopolymers and copolymers of ethylene with higher C₃-C₁₀ α-olefins, with an average molecular weight of from 80 000 to 200 000, preferably from 100 000 to 150 000.

Any polyethylene of known trademarks or mixtures thereof can also be used as HDPE. For example, trademarks of HDPE that can be used include LPPE-276-73, LPPE-273-83, LPPE PE 2260, SABIC HDPE 5429, SABIC HDPE 5933, SABIC HDPE BM 6246 LS, SABIC HDPE F 04660 and other trademarks with similar properties.

The content of HDPE in the composition is from 30 to 50 wt.%, preferably from 33 to 48 wt.%. The lower limit content of HDPE in the composition is determined by the requirements for the surface hardness of an outer polyethylene coating (Shore D hardness (15 sec) must be not less than 58-60 c.u.). In addition, the content of HDPE of less than 30 wt.% or more than 50 wt.% results in a significant deterioration of strength characteristics of the composition (Fig.1). A possible reason for the observed drop of strength in a certain concentration range of HDPE may be structural differences between HDPE and LLDPE macromolecules, leading to a deterioration in compatibility between these phases, depending on their ratio to each other, manifested upon cooling the melt of the mixtures during the crystallization process of HDPE macromolecules. In addition, with increasing the concentration of HDPE in the composition, the possibility of controlling the crystallization process of HDPE macromolecules by the particles of a nucleating agent is significantly reduced due to a sharp increase in the rate of the crystallization process.

The effect of increasing strength characteristics of HDPE and LLDPE-based compositions in the above range of HDPE content occurs in the presence of nucleating agents, which are dispersed particles of either talc or soot (carbon black).

According to the present invention, the content of nucleating agents in the composition is from 0.5 to 10 wt.%, preferably from 0.5 to 8 wt.%.

It is preferable to use nucleating agents with particles of spherical, acicular, flake or plate-like shape with a particle size of not more than 20 µm, preferably not more than 15 µm, and more preferably not more than 10 µm. The use of nucleating agents with particles of plate-like shape is preferable. In addition, the aspect ratio of particles is preferably from 1:2 to 20:1, preferably from 2:1 to 15:1, more preferably 3:1 to 10:1. The term "aspect ratio" as used herein means a ratio of particle length to diameter.

The nucleating agent is added to the composition as a masterbatch in liner low-density polyethylene (LLDPE) or as a masterbatch in high-density polyethylene (HDPE).

The nucleating agent is added to the composition as a masterbatch in LLDPE when soot (carbon black) is used, or as a masterbatch in HDPE when talc is used.

According to the present invention, the masterbatch is previously prepared by mixing the nucleating agent with one of the polyethylenes. When the nucleating agent is talc, its amount in the prepared masterbatch is from 10 to 70 wt.%, preferably from 30 to 40 wt.%. When the nucleating agent is soot (carbon black), which is characterized by higher dispersity compared with talc, its amount in the prepared masterbatch is from 10 to 65 wt.%, preferably from 20 to 35 wt.%. The components are mixed to prepare the masterbatch at a temperature of higher than the melting point of the used polyethylenes and lower than their decomposition temperature. The components are mixed in any mixer known in the art at a temperature of 180 to 250°C, more preferably from 190 to 220°C.

According to the present invention, the whole amount of the nucleating agent used in the composition is consumed to prepare the masterbatch.

According to the present invention, the amount of LLDPE in the composition, which is used to prepare the masterbatch of the nucleating agent, is from 10.5 to 100 wt.%, preferably from 21 to 24.5 wt.%, when the nucleating agent is talc.

In addition, according to the present invention, the amount of LLDPE in the composition, which is used to prepare the masterbatch of the nucleating agent, is from 12 to 100 wt.%, preferably from 23 to 28 wt.%, when the nucleating agent is soot (carbon black).

Further, according to the present invention, the amount of HDPE in the composition, which is used to prepare the masterbatch of the nucleating agent, is from 9 to 100 wt.%, preferably from 18 to 21 wt.%, when the nucleating agent is talc.

In addition, according to the present invention, the amount of HDPE in the composition, which is used to prepare the masterbatch of the nucleating agent, is from 10.5 to 100 wt.%, preferably from 19.5 to 24 wt.%, when the nucleating agent is soot (carbon black).

Moreover, it is preferable to use as a polymer base (polyethylene) to prepare the masterbatch those HDPEs and LLPEs that are identical in nature and properties to the HDPE and LLDPE used in the composition.

Other types and classes of nucleating agents can also be used; however, the best result is achieved with talc and soot (carbon black).

The inventors assume that a possible reason for the observed special action of the nucleating agents, such as talc and soot (carbon black), may be differences in the mechanism of their action on the crystallization process of polyethylene macromolecules from the melt. Given the fact that the crystallization process of the HDPE and LLDPE phases occurs separately and crystallization of HDPE is ahead of that of LLDPE, it is important to control the crystallization process of these polyethylenes, in particular HDPE, in order to ensure uniform distribution of their crystalline phases in the composition.

The inventors have suggested that the nature and properties of nucleating agents, in particular the dispersity and shape of their particles, play a crucial role in controlling the rate of crystallization of polyethylenes. The mechanism of the combined effect of these factors on the crystallization process of polyethylene macrochains as a result of heterogeneous nucleation can be associated, for example, with the effect of dispersed particles of the nucleating agent on an increase in the viscosity of the crystallizing system as a whole, and with the creation of physical barriers preventing the enlargement of growing crystal grains. The flat shape of the particles evidently contributes to this effect to the maximum extent.

The mechanism known from the prior art for heterogeneous nucleation of crystallization of polymers with flat particles of talc involved in the process is an epitaxial mechanism consisting in that in the first step of the crystallization process, the polymer macromolecules are adsorbed on the surface of solid particles of the nucleating agent, which subsequently causes their folding, aggregation and crystallization. The inventors suggest that the use of LLDPE for the preparation of talc masterbatch promotes "blocking" of the surface of talc particles, thus destroying the epitaxial nucleation mechanism. Perhaps, this is due to the fact that lateral branches of macrochains provide stronger adsorption of LLDPE on the surface of talc in comparison with HDPE. As a consequence, the addition of the talc masterbatch in LLDPE to the prepared composition comprising HDPE hinders the adsorption of the macromolecules of ethylene homopolymer on the talc surface, with negative consequences for the properties of the composition.

Particles of soot or carbon black apparently do not "work" by the epitaxial mechanism of nucleation due to their particles, which are significantly smaller than talc particles comparable to the size of the polyethylene macromolecules themselves.

The introduction of soot or carbon black particles into the composition as a masterbatch based on LLDPE retards the crystallization of HDPE macromolecules and improves the strength characteristics of the final composition, which is probably due to the fact that competition for the nucleation centers (particles of soot or carbon black) is significantly greater from LLDPE than from HDPE.

Thus, the use of inorganic nucleating agents such as talc or soot (carbon black), which is unknown from the prior art, ensures the formation of a more homogeneous crystalline phase of polyethylene in the composition, which finally gives a noticeable improvement in the strength characteristics of the composition.

The composition according to the present invention can further comprise other additives such as antioxidants, heat stabilizers, light stabilizers, or mixtures thereof and others. Other additives may be sulfur-containing antioxidants, phenolic or phosphite antioxidants, for example, pentaerythritol ester of 3,5-di-tert-butyl-4-hydroxy-phenylpropionic acid (trademark, Irganox 1010), tri-(phenyl-2,4-di-tert-butyl)phosphite (trademark, Irgafos 168), and/or similar heat stabilizers of other trademarks, and amine light stibilizers and stabilizers of other types or synergistic mixtures of stabilizers of trademarks such as Irganox B225, Irganox B215 and others.

The composition according to the present invention can be prepared by any known method of mixing thermoplastic polymers. The composition is prepared by a method comprising the following steps of:
(a) preparing a masterbatch of a nucleating agent by mixing the nucleating agent with one of the polyethylenes used in the composition;
(b) mixing the masterbatch of the nucleating agent from step (a) with the components of the composition: LLDPE and HDPE.

The components are mixed in any mixing equipment, in particular rotary blade mixers, rake mixers, screw plasticisers, planetary mixers, belt-screw mixers, pneumatic mixers, as well as blade mixers, propeller mixers, turbine mixers, anchor mixers, gyro mixers, and others.

The temperature for mixing the components is traditional for the art and is determined by the properties of a particular polyethylene, in particular, the components are mixed at a temperature higher than the melting point of the polyethylenes in the composition and lower than their decomposition temperature. The temperature of mixing the components is preferably from 180 to 250°C, most preferably from 190 to 220°C.

Methods of processing the resulting composition do not differ from standard methods used in each particular case, depending on the rheological characteristics of polyethylene, for example, compounding in a Banbury internal mixture, melt extrusion, etc. The most preferable method of processing is melt extrusion.

Compositions prepared by the method according to the invention are useful as full-value raw material for the manufacture of cables, in particular an outer sheath for fiber optic cables, an outer insulation layer for pipelines, produced by known methods.

The invention is further explained by means of examples that are provided for illustration of the present invention and are not intended for limiting its scope.

### Embodiments of the invention

The following materials were used as **initial components** to prepare the composition:
1) **LLDPE** - Daelim XP 9200: d=0.918 g/cm³, MFR_{(190/2.16kg)}=1.0 g/10 min, produced by Daelim Industrial Co., Ltd, Korea;
2) **HDPE** - LPP 276-73: d=0.958-0.963 g/cm³, MFR_{(190/2.16kg)}=0.7-0.8 g/10 min, produced by "Kazannefteorgsintez", PAO (JSC), Russia;
3) **PE2NT-22-12** (for comparative examples): d=0.958-0.965 g/cm³, MFR_{(190/2.16kg)}=6-9 g/10 min, produced by "Kazannefteorgsintez", PAO (JSC), Russia;
4) **Bimodal HDPE** (for comparative examples): Yuzex 6100: d=0.952 g/cm³, MFR_{(190/5kg)}=0.05 g/10 min, produced by SK, Korea,

### Additives:

### Nucleating agents (NA) for polymers:

### Inorganic NAs:

soot: N-110, N-339 produced by "Omskcarbongroup", OOO (LLC), Russia;
talc: Jettfine 3CA produced by Luzenac, France;
chalk: Micarb 01-98;
clay: Dellite 72G;
kaolin: Mikao 02-98;
wollastonite: Harwoll 7;
titanium dioxide: PO-2;

### Organic NAs:

Hyperform HPN-20E (34% zinc stearate and 66% 1,2-cyclohexane dicarboxylic acid calcium salt) produced by Milliken (USA).

### Other additives:

antioxidant: Irganox B225;
slip agent (for comparative examples): Erucamide

**The following compositions were used as comparative samples:**
**Borstar 6052,** which is an engineering grade of black bimodal medium-density polyethylene prepared according to the Borstar two-reactor process, Borealis company. The grade is used for the manufacture of a sheath for fiber optic cables.
**PE 6948C,** which is a Russian engineering grade of HDPE used for the manufacture of pressure tubes with pressure parameter PE 100.

### Methods of studying compositions

*The melt flow rate* was determined at a temperature of 190°C and a load of 2.16 N, according to GOST 11645.

*The yield strength, rupture strength and relative elongation at break* were determined according to GOST 11262 at a speed of testing of 50 mm/min.

*The flexural modulus* was determined according to ASTMD 790, the type of testing was a three-point bend test at a speed of testing of 1.3 mm/min.

*The Shore D*/*1 hardness* was determined according to GOST 24621.

*The Vicat (10H) heat resistance test* was carried out according to ASTM 1525.

*The stress-cracking resistance* was determined according to GOST 13518.

### Examples

### Preparation of a composition according to the invention:

The masterbatch of a nucleating agent (Table 1) was prepared by mixing the nucleating agent selected from talc and soot (carbon black) with high-density polyethylene (HDPE) or linear low-density polyethylene (LLDPE) in a Brabender mixer at a temperature of 160 to 190°C.

Then, the prepared masterbatch of the nucleating agent was mixed with the linear low-density polyethylene (LLDPE) and high-density polyethylene (HDPE) in a blade mixer to prepare a composition.

The resulting composition was processed in an extrusion line. The maximum temperature of the melt during processing by extrusion was 210°C.

Samples for physical and mechanical, thermal-physical and other tests were prepared by a hot-pressing method under standard conditions at a temperature of 160 to 190°C.

The formulations of the masterbatches of nucleating agents (NA) are given in Table 1, the compositions and results of studying the PE compositions are given in Tables 2-3, which include Examples 1-19.

These examples are given only as illustration of the present invention and are not intended to limit its scope.

**Table 1. Formulations of the masterbatches of nucleating agents**

| **Materials** | **K-1** | **K-1 comp.** | **K-2** | **K-2 comp.** | K-3 comp. | K-4 comp. | K-5 comp. | K-6 comp. | K-7 comp. | K-8 ccomp | K-9 comp. | K-10 comp. |
|---|---|---|---|---|---|---|---|---|---|---|---|---|
| LLDPE | **75** | | | **50** | | 95 | | | | | | |
| HDPE | | **75** | **50** | | 50 | | 75 | 70 | 70 | 70 | | 49,0 |
| Soot (N-339, N-110) | **25** | **25** | | | | | | | | | | |
| Talc (Jettfine 3CA) | | | **50** | **50** | | | | | | | 30 | 50 |
| Chalk (Micarb 01-98) | | | | | 50 | | | | | | | |
| Hyperform HPN-20E | | | | | | 5 | | | | | | |
| Clay (Dellite 72G) | | | | | | | 25 | | | | | |
| Kaolin (Mikao 02-98) | | | | | | | | 30 | | | | |
| wollastonite (Harwoll 7) | | | | | | | | | 30 | | | |
| Titanium dioxide (PO-2) | | | | | | | | | | 30 | | |
| HDPE (PE2NT22-12 with MFR₅=20) | | | | | | | | | | | 70 | |
| Erucamide | | | | | | | | | | | | 1.0 |

**Table 2. Compositions of Examples 1-10 and their properties**

| **Materials** | | **Component composition, wt.%** | | | | | | | | | | |
|---|---|---|---|---|---|---|---|---|---|---|---|---|
| | **Borstar 6052** | **PE 6948C** | **Ex.1** | **Ex.2 comp.** | **Ex.3** | **Ex.4 comp.** | **Ex.5 comp.** | Ex.6 comp. | Ex.7 comp | Ex.8 comp. | Ex.9 comp. | Ex.10 comp. |
| LLDPE | | | **50** | **57.5** | **55** | **50** | **52.5** | 55 | 54 | 57.5 | 57 | 57 |
| HDPE | | | **40** | **32.5** | **35** | **40** | **37.5** | 35 | 40 | 32.5 | 33 | 33 |
| K-1 | | | **10** | | | | **5** | | | | | |
| K-1 comp. | | | | **10** | | | | | | | | |
| K-2 | | | | | **10** | | **5** | | | | | |
| K-2 comp. | | | | | | **10** | | | | | | |
| K-3 comp. | | | | | | | | 10 | | | | |
| K-4 comp. | | | | | | | | | 6 | | | |
| K-5 comp. | | | | | | | | | | 10 | | |
| K-6 comp. | | | | | | | | | | | 10 | |
| K-7 comp. | | | | | | | | | | | | 10 |

| **Test results:** | | | | | | | | | | | | |
|---|---|---|---|---|---|---|---|---|---|---|---|---|
| MFR_{(190/2.16)}, g/10 min | **0.71** | **0.05** | **0.90** | **0.90** | **0.90** | **0.90** | **0.90** | 0.90 | 0.86 | 0.93 | 0.9 | 0.9 |
| Yield strength, MPa | **18.0** | **27.7** | **19.1** | **18.6** | **20.3** | **20.3** | **21.1** | 19.0 | 18.7 | 19.1 | 22.9 | 21.2 |
| Rupture strength, MPa | **25.9** | **17.8** | **39.7** | **28.2** | **36.3** | **26.3** | **22.5** | 31.1 | 23.5 | 32.9 | 17.6 | 25.3 |
| Relative elongation at break (+23°C), % | **670** | **650** | **790** | **640** | **750** | **610** | **640** | 670 | 590 | 720 | 680 | 690 |
| Flexural modulus, MPa | **560** | **1040** | **550** | **550** | **570** | **570** | **560** | 640 | - | 670 | - | - |
| Shore D hardness (1 sec), units | **60** | **66** | **62** | **63** | **62** | **62** | **63** | 62 | 60 | 62 | 63 | 61 |
| Shore D hardness (15 sec), units | **57** | **62** | **58** | **59** | **59** | **59** | **60** | 59 | 56 | 58 | 60 | 59 |
| T_{Vicat} 10H, °C | **118** | **134** | **123** | **123** | **124** | **125** | **123** | 123 | 123 | 123 | 123 | 123 |
| Stress-cracking resistance, h | **>2000** | **>1000** | **>2000** | - | **>20 00** | - | - | - | - | - | - | - |

**Table 2 (continuation). Compositions of Examples 11-20 and their properties**

| **Materials** | | **Component composition, wt.%** | | | | | | | | | | |
|---|---|---|---|---|---|---|---|---|---|---|---|---|
| | **Ex.1** | **Ex.3** | Ex.11 comp. | Ex.12 comp. | Ex. 13 comp. | **Ex.14 comp.** | **Ex.15 comp.** | **Ex.16 comp.** | **Ex.17** | **Ex.18 comp.** | **Ex.19** | **Ex.20 comp.** |
| LLDPE | **50** | **55** | 57 | 57 | 55 | **50** | **50** | **99** | **40** | **20** | **45** | **42,5** |
| HDPE | **40** | **35** | 33 | 33 | 35 | **35** | **30** | **40** | **40** | **40** | **35** | **37,5** |
| HDPE 2 | 10 | | | | | **5** | **10** | | | | | |
| K-1. | | | | | | **10** | **10** | **1** | **20** | **40** | | |
| K-2 | | **10** | | | | | | | | | **20** | **25** |
| K-8 comp. | | | 10 | | | | | | | | | |
| K-9 comp. | | | | 10 | | | | | | | | |
| K-10 comp. | | | | | 10 | | | | | | | |

| **Test results:** | | | | | | | | | | | | |
|---|---|---|---|---|---|---|---|---|---|---|---|---|
| MFR_{(190/2.16)}, g/10 min | | | 0.90 | 0.90 | 0,90 | **0,81** | **0,72** | **0,91** | **0,86** | **0,83** | **0,89** | **0,87** |
| Yield strength, MPa | | | 21,9 | 20,3 | 19,3 | **18,7** | **18,5** | **18,9** | **21,9** | **20,8** | **23,8** | **25,1** |
| Rupture strength, MPa | | | 24,3 | 26,3 | 29,9 | **29,9** | **28,9** | **29,5** | **33,5** | **29,8** | ***34,5*** | **29,1** |
| Relative elongation at break (+23∘C), % | 790 | 750 | 700 | 610 | 650 | **660** | **620** | **650** | **680** | **650** | **780** | **670** |
| Flexural modulus, MPa | **19,1** | **20,3** | 62 | 62 | 62 | **61** | **62** | **60** | **63** | **63** | **66** | **67** |
| Shore D hardness (1sec), units | **39,7** | **36,3** | 60 | 59 | 59 | **57** | **58** | **57** | **61** | **61** | **63** | **63** |
| Shore D hardness (15sec), units | **790** | **750** | 123 | 125 | 123 | **123** | **124** | **120** | **124** | **124** | **127** | **130** |

The test results of the polyethylene compositions obtained in **Examples 1, 2comp., 3, 4comp.,** and reflected in Table 2 demonstrate the key role of the polymer base of the masterbatches of soot (black carbon) and talc in the effect of increasing the rupture strength and relative elongation at break of the resulting compositions. The introduction of soot (carbon black) as a HDPE-based masterbatch does not lead to an increase in these characteristics of the compositions compared with the introduction of soot (carbon black) as an LLDPE-based masterbatch. The opposite effect is observed for talc used as a nucleating agent, where the best base for the preparation of the masterbatch is HDPE in comparison with LLDPE.

It is also shown that, for all characteristics, the compositions of **Examples 1 and 3** are superior to the known commercial analogue of the bimodal polyethylene composition used for fiber-optic cables Borstar 6052, which is also widely used in the manufacture of pipes. In addition, the presented compositions have superior strength characteristics and relative elongation at break in comparison with the HDPE 6948C composition used for the manufacture of pressure tubes with a pressure parameter of PE-100.

The test results of the polyethylene composition prepared in **Example 5comp.** demonstrate that the combined use of soot (carbon black) and talc does not result in a desired increase in the strength and relative elongation at break of the compositions relative to the use of talc and soot separately as a nucleating agent **(Example 1** and **Example 3).** This effect is probably associated with the competition effect between these nucleating agents when they are co-introduced into a polyethylene composition.

The test results of the polyethylene compositions prepared in **Examples 6comp., 7comp., 8comp., 9comp., 10comp., and 11comp.** indicate the ineffectiveness of the nucleating action of nucleating agents of various classes and nature, compared with talc and soot (technical carbon) **(Examples 1, 3).**

Based on the test results of the polyethylene composition prepared according to **Example 12comp.,** it can be concluded that the use of HDPE with a reduced melt flow rate, for example HDPE of trademark PE22NT22-12, as a polymer base for the preparation of the masterbatch of the nucleating agent leads to a deterioration in the rupture strength and relative elongation at break, as compared to the composition of **Example 3.** Thus, the preparation of the masterbatch of the nucleating agent on the basis of polyethylenes, which are analogs to those used in the basic composition with an MFR_{(910°C/2.16kg)} of 0.1 to 2 g/10 min, is optimal.

**Example 13comp.** demonstrates that the use of a slip agent in the HDPE-based masterbatch of talc has a negative effect on the characteristics of the composition, as compared to Example 3 without a slip agent. Surfactants like erucamide probably block the polar solid surface of talc, thereby destroying the epitaxial nucleation mechanism, which subsequently leads to a significant deterioration in the strength characteristics of the polyethylene composition. This fact confirms that the surface of talc particles probably plays a key role in the nucleation mechanism of HDPE. The nucleation in this case proceeds by the epitaxial mechanism, the role of which was mentioned above.

Based on the characteristics of the polyethylene compositions prepared in **Examples 14comp. and 15comp.,** it can be concluded that the introduction of bimodal HDPE into a composition has a negative effect on the effectiveness of the nucleating action of soot (carbon black) on a mixture of HDPE and LLDPE

**Examples 16comp., 17, 18comp., 19, and 20comp.** demonstrate changes in the rupture strength and relative elongation at break at various ratios of the components in the composition. When the concentration of the soot (carbon black) and talc goes beyond the range that is effective for nucleating action the characteristics of polyethylene compositions deteriorate.

Thus, the best technical result is achieved when a polyethylene composition comprises LLDPE, monomodal HDPE, a nucleating agent, which is introduced into the composition as a talc masterbatch in HDPE or as a soot (carbon black) masterbatch in LLDPE.

With this respect, the HDPE is introduced into the composition in an amount of 30 to 50 wt.%, and the amount of the nucleating agent is from 0.5 to 10 wt.%.

## Claims

1. A polyethylene composition for the manufacture of an article, comprising the following components:
- from 35 to 69.5 wt.% of linear low-density polyethylene (LLDPE);
- from 30 to 50 wt.% of high-density polyethylene (HDPE);
- from 0.5 to 10 wt.% of a nucleating agent selected from talc or soot (carbon black); and
- from 0 to 5 wt.% an optional other additive or a mixture of additives,
wherein the nucleating agent is introduced into the composition as a masterbatch in the LLDPE when soot (carbon black) is used, or as a masterbatch in the HDPE when talc is used,
and polyethylene composition **characterized by** tear strength to 39.7 MPa and the relative elongation at break at 23°C to 790%.

2. The polyethylene composition according to claim 1, wherein the nucleating agent is introduced into the composition as a masterbatch in the high-density polyethylene (HDPE) or as a masterbatch in the linear low-density polyethylene (LLDPE).

3. The polyethylene composition according to any one of claims 1 to 2, wherein the LLDPE is **characterized by** an MFR (190°C /2.16 kg) of from 0.1 to 2 g/10 min, preferably from 0.3 to 1 g/10 min, more preferably from 0.5 to 1 g/10 min.

4. The polyethylene composition according to any one of claims 1 to 2, wherein the LLDPE is **characterized by** a density of from 0.910 to 0.935 g/cm³, preferably from 0.915 to 0.935 g/cm³, more preferably from 0.918 to 0.930 g/cm³.

5. The polyethylene composition according to any one of claims 1 to 3, wherein the LLDPE is **characterized by** a molecular weight (Mw) of from 50 000 to 400 000, preferably from 70 000 to 250 000, most preferably from 80 000 to 100 000.

6. The polyethylene composition according to any one of claims 1 to 3, wherein the HDPE is **characterized by** an MFR (190°C /2.16 kg) of from 0.1 to 2 g/10 min, preferably from 0.5 to 1 g/10 min.

7. The polyethylene composition according to any one of claims 1 to 2, wherein the HDPE is **characterized by** a density of from 0.945 to 0.970 g/cm³, preferably from 0.955 to 0.965 g/cm³.

8. The polyethylene composition according to any one of claims 1 to 2, wherein the HDPE is **characterized by** a molecular weight (Mw) of from 80 000 to 200 000, preferably from 100 000 to 150 000.

9. The polyethylene composition according to any one of claims 1 to 2, wherein the HDPE is monomodal.

10. The polyethylene composition according to any one of the preceding claims, wherein the nucleating agents are particles of spherical, acicular, flake or plate-like shape, preferably the nucleating agents are particles of plate-like shape.

11. The polyethylene composition according to any one of the preceding claims, wherein the nucleating agents are particles of a size of not more than 20 µm, preferably of not more than 15 µm, more preferably of not more than 10 µm.

12. The polyethylene composition according to any one of the preceding claims, wherein the nucleating agents are particles with an aspect ratio of 1:1 to 20:1, preferably of 2:1 to 15:1, more preferably of 3:1 to 10:1.

13. The polyethylene composition according to any one of the preceding claims, wherein the content of the LTDPE is from 39 to 66.5 wt.%.

14. The polyethylene composition according to claim 1, wherein the content of the HDPE is from 33 to 48 wt.%.

15. The polyethylene composition according to any one of the preceding claims, wherein the content of the nucleating agent is from 0.5 to 8 wt.%.

16. The polyethylene composition according to any one of the preceding claims, wherein the nucleating agent is introduced as a masterbatch of talc in the HDPE, in which the content of talc is from 10 to 50 wt.%.

17. The polyethylene composition according to any one of the preceding claims, wherein the nucleating agent is introduced as a masterbatch of soot in the LLDPE, in which the content of soot in the linear low-density polyethylene (LLDPE) is from 10 to 50 wt.%, preferably 20 to 35 wt.%.

18. The polyethylene composition according to any one of the preceding claims, wherein for the preparation of the masterbatch of the nucleating agent, HDPE and LLDPE are used that are identical in nature and properties to the HDPE and LLDPE used in the basic composition.

19. A method for preparing a polyethylene composition according to any one of claims 1 to 18, comprising:
(a) preparing a masterbatch of a nucleating agent by mixing the nucleating agent selected from talc or soot (carbon black) with high density polyethylene (HDPE) or linear low-density polyethylene (LLDPE);
(b) mixing the masterbatch of the nucleating agent prepared in step (a) with linear low-density polyethylene (LLDPE) and high density polyethylene (HDPE) wherein the nucleating agent is introduced into the composition as a masterbatch in the LLDPE when soot (carbon black) is used, or as a masterbatch in the HDPE when talc is used

20. The method for preparing a polyethylene composition according to claim 19, wherein the masterbatch of the nucleating agent is prepared by mixing of soot (carbon black) with the LLDPE or by mixing talc with the HDPE.

21. The method for preparing a polyethylene composition according to any one of claims 19 to 20, wherein the masterbatch of the nucleating agent is prepared by mixing talc in an amount of 10 to 50 wt.%, preferably 30 to 40 wt.%, with the HDPE.

22. The method for preparing a polyethylene composition according to any one of claims 19 to 20, wherein the masterbatch of the nucleating agent is prepared by mixing soot (carbon black) in an amount of 10 to 50 wt.%, preferably 20 to 35 wt.%, with the LLDPE.

23. The method for preparing a polyethylene composition according to any one of claims 19 to 22, wherein the mixing of the components is carried out at a temperature higher than the melting point of the polyethylenes composing the composition and lower than their decomposition temperature.

24. The method for preparing a polyethylene composition according to claim 23, wherein the mixing of the components is carried out at a temperature of from 180°C to 250°C, preferably at a temperature of from 150 to 250°C, more preferably at a temperature of from 190 to 220°C.

25. Use of a composition according to any one of claims 1 to 18 in the manufacture of articles.

26. The use according to claim 25, wherein the article is a sheath of fiber optic cables or an outer insulation layer of pipelines.

27. An article made of a composition according to any one of claims 1 to 18.

28. The article according to claim 27, wherein the article is a sheath for fiber optic cables or an outer insulation layer for pipelines.

## Patentansprüche

1. Polyethylen-Zusammensetzung zur Herstellung eines Artikels, umfassend die folgenden Komponenten:
- 35 bis 69,5 Gew.-% lineares Polyethylen niedriger Dichte (LLDPE);
- 30 bis 50 Gew.-% Polyethylen hoher Dichte (HDPE);
- 0,5 bis 10 Gew.-% eines Nukleierungsmittels, ausgewählt aus Talk oder Ruß (Ruß), und
- 0 bis 5 Gew.-% eines optionalen weiteren Additivs oder einer Mischung von Additiven,
wobei der Nukleierungsmittel in die Zusammensetzung als Masterbatch in das LLDPE eingebracht wird, wenn Ruß (Ruß) verwendet wird, oder als Masterbatch in das HDPE, wenn Talk verwendet wird,
und Polyethylen-Zusammensetzung, **gekennzeichnet durch** eine Reißfestigkeit von 39,7 MPa und eine relative Bruchdehnung bei 23 °C von 790 %.

2. Polyethylen-Zusammensetzung nach Anspruch 1, wobei das Nukleierungsmittel in die Zusammensetzung als Masterbatch in das hochdichte Polyethylen (HDPE) oder als Masterbatch in das lineare Polyethylen niedriger Dichte (LLDPE) eingebracht wird.

3. Polyethylen-Zusammensetzung nach einem der Ansprüche 1 bis 2, wobei das LLDPE durch einen MFR (190 °C/2,16 kg) von 0,1 bis 2 g/10 min, vorzugsweise von 0,3 bis 1 g/10 min, noch bevorzugter von 0,5 bis 1 g/10 min gekennzeichnet ist.

4. Polyethylen-Zusammensetzung nach einem der Ansprüche 1 bis 2, wobei das LLDPE durch eine Dichte von 0,910 bis 0,935 g/cm³, vorzugsweise von 0,915 bis 0,935 g/cm³, noch bevorzugter von 0,918 bis 0,930 g/cm³ gekennzeichnet ist.

5. Polyethylen-Zusammensetzung nach einem der Ansprüche 1 bis 3, wobei das LLDPE durch ein Molekulargewicht (Mw) von 50 000 bis 400 000, vorzugsweise von 70 000 bis 250 000, am meisten bevorzugt von 80 000 bis 100 000 gekennzeichnet ist.

6. Polyethylen-Zusammensetzung nach einem der Ansprüche 1 bis 3, wobei das HDPE durch einen MFR (190 °C/2,16 kg) von 0,1 bis 2 g/10 min, vorzugsweise von 0,5 bis 1 g/10 min, gekennzeichnet ist.

7. Polyethylen-Zusammensetzung nach einem der Ansprüche 1 bis 2, wobei das HDPE durch eine Dichte von 0,945 bis 0,970 g/cm³, vorzugsweise von 0,955 bis 0,965 g/cm³, gekennzeichnet ist.

8. Polyethylen-Zusammensetzung nach einem der Ansprüche 1 bis 2, wobei das HDPE durch ein Molekulargewicht (Mw) von 80 000 bis 200 000, vorzugsweise von 100 000 bis 150 000, gekennzeichnet ist.

9. Polyethylen-Zusammensetzung nach einem der Ansprüche 1 bis 2, wobei das HDPE monomodales Polyethylen ist.

10. Polyethylen-Zusammensetzung nach einem der vorstehenden Ansprüche, wobei die Nukleierungsmittel Partikel mit kugelförmiger, nadelförmiger, flockenförmiger oder plattenförmiger Gestalt sind, vorzugsweise sind die Nukleierungsmittel Partikel mit plattenförmiger Gestalt.

11. Polyethylen-Zusammensetzung nach einem der vorstehenden Ansprüche, wobei die Keimbildner Partikel mit einer Größe von nicht mehr als 20 µm, vorzugsweise von nicht mehr als 15 µm, noch bevorzugter von nicht mehr als 10 µm sind.

12. Polyethylen-Zusammensetzung nach einem der vorstehenden Ansprüche, wobei die Nukleierungsmittel Partikel mit einem Aspektverhältnis von 1:1 bis 20:1, vorzugsweise von 2:1 bis 15:1, noch bevorzugter von 3:1 bis 10:1 sind.

13. Polyethylen-Zusammensetzung nach einem der vorstehenden Ansprüche, wobei der Gehalt an LTDPE 39 bis 66,5 Gew.-% beträgt.

14. Polyethylen-Zusammensetzung nach Anspruch 1, wobei der Gehalt an HDPE 33 bis 48 Gew.-% beträgt.

15. Polyethylen-Zusammensetzung nach einem der vorstehenden Ansprüche, wobei der Gehalt an Nukleierungsmittel 0,5 bis 8 Gew.-% beträgt.

16. Polyethylenzusammensetzung nach einem der vorstehenden Ansprüche, wobei das Nukleierungsmittel als Masterbatch aus Talk in das HDPE eingebracht wird, wobei der Gehalt an Talk 10 bis 50 Gew.-% beträgt.

17. Polyethylen-Zusammensetzung nach einem der vorstehenden Ansprüche, wobei das Nukleierungsmittel als Ruß-Masterbatch in das LLDPE eingebracht wird, wobei der Rußgehalt im linearen Polyethylen niedriger Dichte (LLDPE) 10 bis 50 Gew.-%, vorzugsweise 20 bis 35 Gew.-%, beträgt.

18. Polyethylen-Zusammensetzung nach einem der vorstehenden Ansprüche, wobei zur Herstellung der Masterbatch des Nukleierungsmittels HDPE und LLDPE verwendet werden, die in ihrer Beschaffenheit und ihren Eigenschaften mit dem in der Grundzusammensetzung verwendeten HDPE und LLDPE identisch sind.

19. Verfahren zur Herstellung einer Polyethylen-Zusammensetzung gemäß einem der Ansprüche 1 bis 18, umfassend:
(a) Herstellen einer Masterbatch eines Nukleierungsmittels durch Mischen des Nukleierungsmittels, ausgewählt aus Talk oder Ruß (Ruß), mit hochdichtem Polyethylen (HDPE) oder linearem Polyethylen niedriger Dichte (LLDPE);
(b) Mischen der in Schritt (a) hergestellten Masterbatch des Nukleierungsmittels mit linearem Polyethylen niedriger Dichte (LLDPE) und Polyethylen hoher Dichte (HDPE), wobei das Nukleierungsmittel in die Zusammensetzung als Masterbatch in das LLDPE eingebracht wird, wenn Ruß (Ruß) verwendet wird, oder als Masterbatch in das HDPE, wenn Talk verwendet wird.

20. Verfahren zur Herstellung einer Polyethylen-Zusammensetzung nach Anspruch 19, wobei die Masterbatch des Nukleierungsmittels durch Mischen von Ruß (Ruß) mit dem LLDPE oder durch Mischen von Talk mit dem HDPE hergestellt wird.

21. Verfahren zur Herstellung einer Polyethylen-Zusammensetzung nach einem der Ansprüche 19 bis 20, wobei die Masterbatch des Nukleierungsmittels durch Mischen von Talk in einer Menge von 10 bis 50 Gew.-%, vorzugsweise 30 bis 40 Gew.-%, mit dem HDPE hergestellt wird.

22. Verfahren zur Herstellung einer Polyethylen-Zusammensetzung nach einem der Ansprüche 19 bis 20, wobei das Masterbatch des Nukleierungsmittels durch Mischen von Ruß (Ruß) in einer Menge von 10 bis 50 Gew.-%, vorzugsweise 20 bis 35 Gew.-%, mit dem LLDPE hergestellt wird.

23. Verfahren zur Herstellung einer Polyethylen-Zusammensetzung nach einem der Ansprüche 19 bis 22, wobei das Mischen der Komponenten bei einer Temperatur durchgeführt wird, die höher ist als der Schmelzpunkt der die Zusammensetzung bildenden Polyethylene und niedriger als deren Zersetzungstemperatur.

24. Verfahren zur Herstellung einer Polyethylen-Zusammensetzung nach Anspruch 23, wobei das Mischen der Komponenten bei einer Temperatur von 180 °C bis 250 °C, vorzugsweise bei einer Temperatur von 150 bis 250 °C, noch bevorzugter bei einer Temperatur von 190 bis 220 °C durchgeführt wird.

25. Verwendung einer Zusammensetzung gemäß einem der Ansprüche 1 bis 18 zur Herstellung von Gegenständen.

26. Verwendung gemäß Anspruch 25, wobei der Gegenstand eine Ummantelung für Glasfaserkabel oder eine äußere Isolierschicht für Rohrleitungen ist.

27. Gegenstand, der aus einer Zusammensetzung gemäß einem der Ansprüche 1 bis 18 hergestellt ist.

28. Gegenstand gemäß Anspruch 27, wobei der Gegenstand eine Ummantelung für Glasfaserkabel oder eine äußere Isolierschicht für Rohrleitungen ist.

## Revendications

1. Composition de polyéthylène destinée à la fabrication d'un article, comprenant les composants suivants :
- de 35 à 69,5 % en poids de polyéthylène linéaire à basse densité (LLDPE) ;
- de 30 à 50 % en poids de polyéthylène haute densité (HDPE) ;
- de 0,5 à 10 % en poids d'un agent nucléant choisi parmi le talc ou le noir de carbone (suie) ; et
- de 0 à 5 % en poids d'un autre additif facultatif ou d'un mélange d'additifs,
dans laquelle l'agent nucléant est introduit dans la composition sous forme de mélange maître dans le LLDPE lorsque de la suie (noir de carbone) est utilisée, ou sous forme de mélange maître dans le HDPE lorsque du talc est utilisé,
et composition de polyéthylène **caractérisée par** une résistance à la déchirure de 39,7 MPa et un allongement relatif à la rupture à 23 °C de 790 %.

2. Composition de polyéthylène selon la revendication 1, dans laquelle l'agent de nucléation est introduit dans la composition sous forme de mélange maître dans le polyéthylène haute densité (PEHD) ou sous forme de mélange maître dans le polyéthylène linéaire basse densité (LLDPE).

3. Composition de polyéthylène selon l'une quelconque des revendications 1 à 2, dans laquelle le LLDPE est **caractérisé par** un MFR (190 °C /2,16 kg) de 0,1 à 2 g/10 min, de préférence de 0,3 à 1 g/10 min, plus préférablement de 0,5 à 1 g/10 min.

4. Composition de polyéthylène selon l'une quelconque des revendications 1 à 2, dans laquelle le LLDPE est **caractérisé par** une densité comprise entre 0,910 et 0,935 g/cm³, de préférence entre 0,915 et 0,935 g/cm³, plus préférablement entre 0,918 et 0,930 g/cm³.

5. Composition de polyéthylène selon l'une quelconque des revendications 1 à 3, dans laquelle le LLDPE est **caractérisé par** un poids moléculaire (Mw) compris entre 50 000 et 400 000, de préférence entre 70 000 et 250 000, plus préférablement entre 80 000 et 100 000.

6. Composition de polyéthylène selon l'une quelconque des revendications 1 à 3, dans laquelle le HDPE est **caractérisé par** un MFR (190 °C /2,16 kg) compris entre 0,1 et 2 g/10 min, de préférence entre 0,5 et 1 g/10 min.

7. Composition de polyéthylène selon l'une quelconque des revendications 1 à 2, dans laquelle le HDPE est **caractérisé par** une densité comprise entre 0,945 et 0,970 g/cm³, de préférence entre 0,955 et 0,965 g/cm³.

8. Composition de polyéthylène selon l'une quelconque des revendications 1 à 2, dans laquelle le HDPE est **caractérisé par** un poids moléculaire (Mw) compris entre 80 000 et 200 000, de préférence entre 100 000 et 150 000.

9. Composition de polyéthylène selon l'une quelconque des revendications 1 à 2, dans laquelle le HDPE est monomodal.

10. Composition de polyéthylène selon l'une quelconque des revendications précédentes, dans laquelle les agents de nucléation sont des particules de forme sphérique, aciculaire, en paillettes ou en plaques, de préférence les agents de nucléation sont des particules de forme en plaques.

11. Composition de polyéthylène selon l'une quelconque des revendications précédentes, dans laquelle les agents nucléants sont des particules d'une taille inférieure ou égale à 20 µm, de préférence inférieure ou égale à 15 µm, plus préférablement inférieure ou égale à 10 µm.

12. Composition de polyéthylène selon l'une quelconque des revendications précédentes, dans laquelle les agents nucléants sont des particules ayant un rapport d'aspect de 1:1 à 20:1, de préférence de 2:1 à 15:1, plus préférablement de 3:1 à 10:1.

13. Composition de polyéthylène selon l'une quelconque des revendications précédentes, dans laquelle la teneur en LTDPE est comprise entre 39 et 66,5 % en poids.

14. Composition de polyéthylène selon la revendication 1, dans laquelle la teneur en HDPE est comprise entre 33 et 48 % en poids.

15. Composition de polyéthylène selon l'une quelconque des revendications précédentes, dans laquelle la teneur en agent nucléant est comprise entre 0,5 et 8 % en poids.

16. Composition de polyéthylène selon l'une quelconque des revendications précédentes, dans laquelle l'agent nucléant est introduit sous forme de mélange maître de talc dans le HDPE, dans lequel la teneur en talc est comprise entre 10 et 50 % en poids.

17. Composition de polyéthylène selon l'une quelconque des revendications précédentes, dans laquelle l'agent nucléant est introduit sous forme de mélange maître de suie dans le LLDPE, dans lequel la teneur en suie dans le polyéthylène linéaire à basse densité (LLDPE) est comprise entre 10 et 50 % en poids, de préférence entre 20 et 35 % en poids.

18. Composition de polyéthylène selon l'une quelconque des revendications précédentes, dans laquelle, pour la préparation du mélange maître de l'agent nucléant, on utilise du HDPE et du LLDPE qui sont identiques en nature et en propriétés au HDPE et au LLDPE utilisés dans la composition de base.

19. Procédé de préparation d'une composition de polyéthylène selon l'une quelconque des revendications 1 à 18, comprenant :
(a) la préparation d'un mélange maître d'un agent nucléant en mélangeant l'agent nucléant choisi parmi le talc ou la suie (noir de carbone) avec du polyéthylène haute densité (PEHD) ou du polyéthylène linéaire basse densité (PEBDL) ;
(b) le mélange du mélange maître de l'agent nucléant préparé à l'étape (a) avec du polyéthylène linéaire à basse densité (LLDPE) et du polyéthylène haute densité (HDPE), dans lequel l'agent nucléant est introduit dans la composition sous forme de mélange maître dans le LLDPE lorsque de la suie (noir de carbone) est utilisée, ou sous forme de mélange maître dans le HDPE lorsque du talc est utilisé.

20. Procédé de préparation d'une composition de polyéthylène selon la revendication 19, dans lequel le mélange maître de l'agent nucléant est préparé en mélangeant de la suie (noir de carbone) avec le LLDPE ou en mélangeant du talc avec le HDPE.

21. Procédé de préparation d'une composition de polyéthylène selon l'une quelconque des revendications 19 à 20, dans lequel le mélange maître de l'agent nucléant est préparé en mélangeant du talc en une quantité de 10 à 50 % en poids, de préférence de 30 à 40 % en poids, avec le PEHD.

22. Procédé de préparation d'une composition de polyéthylène selon l'une quelconque des revendications 19 à 20, dans lequel le mélange maître de l'agent de nucléation est préparé en mélangeant de la suie (noir de carbone) en une quantité de 10 à 50 % en poids, de préférence de 20 à 35 % en poids, avec le LLDPE.

23. Procédé de préparation d'une composition de polyéthylène selon l'une quelconque des revendications 19 à 22, dans lequel le mélange des composants est effectué à une température supérieure au point de fusion des polyéthylènes composant la composition et inférieure à leur température de décomposition.

24. Procédé de préparation d'une composition de polyéthylène selon la revendication 23, dans lequel le mélange des composants est effectué à une température comprise entre 180 °C et 250 °C, de préférence à une température comprise entre 150 °C et 250 °C, plus préférablement à une température comprise entre 190 °C et 220 °C.

25. Utilisation d'une composition selon l'une quelconque des revendications 1 à 18 dans la fabrication d'articles.

26. Utilisation selon la revendication 25, dans laquelle l'article est une gaine de câbles à fibres optiques ou une couche d'isolation extérieure de pipelines.

27. Article fabriqué à partir d'une composition selon l'une quelconque des revendications 1 à 18.

28. Article selon la revendication 27, dans lequel l'article est une gaine pour câbles à fibres optiques ou une couche d'isolation extérieure pour pipelines.
